# FASCICULE DE BREVET EUROPEEN

(11) **EP 4 230 099 B1**
(45) Date de publication et mention de la délivrance du brevet: **15.04.2026**
(21) Numéro de dépôt: 23155895.8
(22) Date de dépôt: 09.02.2023
(51) Int. Cl.: A47J 37/06

(54) **APPAREIL DE CUISSON ELECTRIQUE EQUIPE D'UN DISPOSITIF DE MESURE D' EPAISSEUR**
ELEKTRISCHES KOCHGERÄT MIT DICKENMESSVORRICHTUNG
ELECTRIC COOKING APPLIANCE EQUIPPED WITH A THICKNESS MEASURING DEVICE

(30) Priorité: 16.02.2022 FR 2201363
(43) Date de publication de la demande: 23.08.2023
(73) Titulaire: SEB S.A., 69130 Ecully (FR)
(72) Inventeur: FORNECKER, Florent, 69134 ECULLY (FR)
(74) Mandataire: SEB Développement

(56) Documents cités:
- WO-A1-2013/186487
- WO-A1-2017/118623
- CN-A- 101 530 296

## Description

### Domaine technique

La présente invention concerne de manière générale un appareil de cuisson pour la cuisson de produits alimentaires, et en particulier un appareil de cuisson électrique de type grill.

### Etat de la technique

Le document WO2013186487 divulgue un appareil de cuisson comprenant :
- une première structure comportant une plaque chauffante configurée pour cuire un aliment ;
- une deuxième structure qui est montée articulée par rapport à la première structure autour d'un axe de pivotement et qui est solidaire en rotation d'un arbre de pivotement s'étendant selon l'axe de pivotement, et
- un dispositif de mesure configuré pour mesurer l'épaisseur d'un aliment disposé sur la plaque chauffante, le dispositif de mesure comprenant un balancier pivotant lié par une première extrémité à l'arbre de pivotement ; et un moyen de mesure configuré pour mesurer l'angle de pivotement du balancier et pour estimer l'épaisseur de l'aliment en fonction de l'angle de pivotement mesurer.

L'appareil de cuisson décrit dans le document WO2013186487 est plus particulièrement configuré de telle sorte qu'un mouvement d'écartement de la deuxième structure par rapport à la première structure génère un pivotement de l'arbre de pivotement par rapport à la première structure, entraînant le pivotement du balancier.

Afin d'améliorer la précision de la mesure d'épaisseur et de restreindre la plage de mesure de l'écartement entre les première et deuxième structures, le document WO2013186487 divulgue la possibilité de rendre débrayable le balancier de l'arbre de pivotement, par exemple par la présence d'une lame flexible interposée entre la balancier et l'arbre de pivotement.

Un inconvénient relatif à une telle configuration de l'appareil de cuisson divulgué dans le document WO2013186487 réside dans l'encombrement global généré par les différentes pièces en mouvement assurant l'accouplement entre l'arbre de pivotement et le moyen de mesure. Un autre inconvénient réside dans l'utilisation d'une lame flexible afin de débrayer le balancier de l'arbre de pivotement ; les matériaux élastiques, tel que les lames flexibles, offrant une durabilité limitée lorsqu'ils sont soumis à des cycles répétés de déformation.

### Résumé de l'invention

La présente invention vise à remédier à ces inconvénients.

Le problème technique à la base de l'invention consiste notamment à fournir un appareil de cuisson électrique permettant une mesure aisée et précise de l'épaisseur d'un aliment, qui soit de structure simple, fiable et économique, tout en présentant un encombrement latéral réduit.

A cet effet, la présente invention concerne un appareil de cuisson électrique pour la cuisson d'aliments, l'appareil de cuisson électrique comportant :
- une structure chauffante inférieure qui comporte un module de cuisson inférieur configuré pour cuire un aliment disposé sur le module de cuisson inférieur ;
- une structure supérieure montée articulée par rapport à la structure chauffante inférieure par l'intermédiaire d'une liaison pivot principale définissant un axe de pivotement principal, ladite structure supérieure étant configurée pour occuper au moins :
   o une position d'ouverture maximale dans laquelle la structure chauffante inférieure et la structure supérieure présentent un écartement maximal et au moins un aliment peut être disposé sur le module de cuisson inférieur,
   o une position de fermeture dans laquelle la structure chauffante inférieure et la structure supérieure présentent un écartement minimal,
   o une pluralité de positions d'ouverture intermédiaires qui sont situées entre la position d'ouverture maximale et la position de fermeture,
- une unité de commande configurée pour commander le fonctionnement de l'appareil de cuisson électrique;
- un élément de liaison qui est couplé en rotation à la structure supérieure et qui est mobile en rotation autour de l'axe de pivotement principal,
- un balancier monté mobile en rotation autour de l'axe de pivotement principal et entre une première position de balancier et une deuxième position de balancier,
- un dispositif de mesure configuré pour coopérer avec le balancier et pour mesurer l'épaisseur de l'aliment disposé sur le module de cuisson inférieur en fonction de la position occupée par le balancier entre la première position de balancier et la deuxième position de balancier, et
- un mécanisme d'accouplement interposé entre le balancier et l'élément de liaison, le mécanisme d'accouplement étant déplaçable entre un état embrayé dans lequel le mécanisme d'accouplement est configuré pour déplacer en rotation le balancier de la première position de balancier vers la deuxième position de balancier lors d'un déplacement de la structure supérieure d'une position d'ouverture intermédiaire prédéterminée vers la position de fermeture, et un état débrayé dans lequel le mécanisme d'accouplement est configuré pour autoriser un déplacement en rotation de l'élément de liaison par rapport au balancier lors d'un déplacement de la structure supérieure de la position d'ouverture intermédiaire prédéterminée vers la position d'ouverture maximale, caractérisé en ce que le mécanisme d'accouplement comporte une rainure en arc de cercle qui est sensiblement centrée sur l'axe de pivotement principal et qui est prévue sur le balancier, et un doigt d'entrainement qui est prévu sur l'élément de liaison et qui est configuré pour coulisser dans la rainure en arc de cercle lorsque la structure supérieure est déplacée de la position d'ouverture intermédiaire prédéterminée vers la position d'ouverture maximale, et en ce que la rainure en arc de cercle comporte une première extrémité et une deuxième extrémité qui est opposée à la première extrémité, la deuxième extrémité définissant une butée d'actionnement contre laquelle est configuré pour venir en butée le doigt d'entrainement lorsque la structure supérieure, déplacée de la position d'ouverture maximale vers la position d'ouverture intermédiaire prédéterminée, atteint la position d'ouverture intermédiaire prédéterminée, la butée d'actionnement et le doigt d'entrainement étant configurés de telle sorte qu'un déplacement de la structure supérieure de la position d'ouverture intermédiaire prédéterminée vers la position de fermeture entraîne un déplacement du balancier de la première position de balancier vers la deuxième position de balancier.

Une telle configuration du mécanisme d'accouplement permet de ne pas réaliser de mesure d'épaisseur lorsque la structure supérieure est déplacée entre la position d'ouverture maximale et la position d'ouverture intermédiaire prédéterminée. Ainsi, il est possible de calibrer la mesure d'épaisseur effectuée par le dispositif de mesure uniquement sur une plage de mesure restreinte, et donc d'augmenter la précision de la mesure d'épaisseur.

De plus, la configuration spécifique du mécanisme d'accouplement, et plus particulièrement la présence d'un doigt d'entrainement apte à coulisser dans une rainure en arc de cercle, confère un encombrement latéral réduit à l'appareil de cuisson électrique, tout en limitant les risques d'usure prématuré du mécanisme d'accouplement.

L'appareil de cuisson électrique peut en outre présenter une ou plusieurs des caractéristiques suivantes, prises seules ou en combinaison.

Selon un mode de réalisation de l'invention, l'élément de liaison est solidaire en rotation de la structure supérieure.

Selon un mode de réalisation de l'invention, la première extrémité de la rainure en arc de cercle définit une butée d'ouverture contre laquelle est configuré pour venir en butée le doigt d'entrainement lorsque la structure supérieure atteint la position d'ouverture maximale.

Selon un mode de réalisation de l'invention, la structure chauffante inférieure comporte une partie de butée mécanique contre laquelle est configuré pour venir en butée le balancier lorsque le balancier occupe la première position de balancier, la butée d'ouverture et la partie de butée mécanique étant configurées pour limiter la course de pivotement de la structure supérieure à distance de la structure chauffante inférieure.

Selon un mode de réalisation de l'invention, le balancier est configuré pour occuper la première position de balancier lorsque la structure supérieure occupe une position située entre la position d'ouverture maximale et la position d'ouverture intermédiaire prédéterminée.

Selon un mode de réalisation de l'invention, l'appareil de cuisson électrique comporte une partie de butée contre laquelle est configuré pour venir en butée le balancier lorsque le balancier occupe la première position de balancier.

Selon un mode de réalisation de l'invention, la position d'ouverture intermédiaire prédéterminée de la structure supérieure correspond à une position de mesure d'épaisseur maximale d'un aliment disposé sur le module de cuisson inférieur.

Selon un mode de réalisation de l'invention, l'appareil de cuisson électrique comporte un dispositif de chauffage inférieur qui est prévu dans la structure chauffante inférieure et qui est configuré pour chauffer le module de cuisson inférieur.

Selon un mode de réalisation de l'invention, le dispositif de chauffage inférieur est disposé sous le module de cuisson inférieur.

Selon un mode de réalisation de l'invention, le dispositif de chauffage inférieur comporte un élément résistif chauffant inférieur.

Selon un mode de réalisation de l'invention, la structure supérieure est une structure chauffante supérieure et comporte un module de cuisson supérieur configuré pour cuire un aliment enserré entre le module de cuisson supérieur et le module de cuisson inférieur.

Selon un mode de réalisation de l'invention, le dispositif de mesure est configuré pour mesurer l'écartement relatif entre le module de cuisson supérieur et le module de cuisson inférieur.

Selon un mode de réalisation de l'invention, l'appareil de cuisson électrique comporte un dispositif de chauffage supérieur qui est prévu dans la structure supérieure et qui est configuré pour chauffer le module de cuisson supérieur.

Selon un mode de réalisation de l'invention, le dispositif de chauffage supérieur est disposé au-dessus du module de cuisson supérieur.

Selon un mode de réalisation de l'invention, le dispositif de chauffage supérieur comporte un élément résistif chauffant supérieur.

Selon un mode de réalisation, les modules de chauffages supérieur et inférieurs sont des plaques de cuisson.

Selon un mode de réalisation de l'invention, l'unité de commande est configurée pour contrôler la cuisson de l'aliment en fonction de l'épaisseur de l'aliment disposé sur le module de cuisson inférieur.

Selon un mode de réalisation de l'invention, le dispositif de mesure est disposé dans la structure chauffante inférieure, et par exemple dans un pied de la structure chauffante inférieure.

Selon un mode de réalisation de l'invention, le balancier est disposé dans la structure chauffante inférieure, et par exemple dans un pied de la structure chauffante inférieure.

Selon un mode de réalisation de l'invention, le balancier est prévu à proximité d'un bord latéral de la structure chauffante inférieure.

Selon un mode de réalisation de l'invention, le dispositif de mesure comporte un organe de mesure rotatif et un organe d'accouplement rotatif qui est couplé en rotation avec l'organe de mesure rotatif et qui est configuré pour coopérer avec le balancier. L'utilisation de l'organe d'accouplement rotatif permet de convertir le déplacement de la structure supérieure, par rapport à la structure chauffante inférieure, en un mouvement de rotation au niveau de l'organe de mesure rotatif. Ainsi, il est possible d'utiliser un organe de mesure rotatif, tel qu'un potentiomètre rotatif, et d'éviter l'encombrement généré par l'utilisation d'un potentiomètre linéaire.

Selon un mode de réalisation de l'invention, l'organe d'accouplement rotatif est monté mobile en rotation selon un axe de rotation qui est sensiblement parallèle à l'axe de pivotement principal.

Selon un mode de réalisation de l'invention, l'organe d'accouplement rotatif est un pignon denté configuré pour coopérer avec un secteur denté prévu sur le balancier.

Selon un mode de réalisation de l'invention, la rainure en arc de cercle s'étend sur un secteur angulaire qui est sensiblement centrée sur l'axe de pivotement principal et ayant un angle compris entre 90° et 215°, et avantageusement entre 100° et 130° et est par exemple de 115°.

Selon un mode de réalisation de l'invention, l'appareil de cuisson électrique comporte un dispositif de rappel configuré pour solliciter le balancier vers la première position de balancier.

Selon un mode de réalisation de l'invention, le dispositif de rappel est un ressort de rappel.

Selon un mode de réalisation de l'invention, le dispositif de rappel est relié à la partie inférieure du balancier.

Selon un mode de réalisation de l'invention, la structure supérieure est reliée à la liaison pivot principale par au moins un bras de liaison, et par exemple par deux bras de liaison latéraux.

Selon un mode de réalisation de l'invention, l'au moins un bras de liaison est solidaire en rotation d'un arbre de pivotement appartenant à la liaison pivot principale et s'étendant selon l'axe de pivotement principal.

Selon un mode de réalisation de l'invention, la structure supérieure comporte une poignée de préhension. De façon avantageuse, la poignée de préhension est située sur une partie avant de de la structure supérieure.

Selon un mode de réalisation de l'invention, l'appareil de cuisson électrique comporte au moins une liaison pivot secondaire qui est configurée pour relier la structure supérieure à l'au moins un bras de liaison et pour autoriser une rotation de la structure supérieure par rapport à l'au moins un bras de liaison autour d'un axe de pivotement secondaire. Avantageusement, l'au moins une liaison pivot secondaire permet de positionner le module de cuisson supérieur selon l'orientation voulue, et en général sensiblement parallèlement au module de cuisson inférieur, sans être influencé par l'écartement relatif des modules de cuisson supérieur et inférieur.

Selon un mode de réalisation de l'invention, l'axe de pivotement secondaire est sensiblement parallèle à l'axe de pivotement principal.

### Brève description des figures

La présente invention sera bien comprise à l'aide de la description qui suit en référence aux figures annexées, dans lesquelles des signes de références identiques correspondent à des éléments structurellement et/ou fonctionnellement identiques ou similaires.
La figure 1 est une vue de côté d'un appareil de cuisson électrique selon un mode de réalisation de l'invention ;
la figure 2 est une vue en perspective d'un dispositif de mesure et d'un balancier de l'appareil de cuisson électrique de la figure 1 ;
la figure 3 est une vue éclatée en perspective d'un dispositif de mesure et d'un balancier de l'appareil de cuisson électrique de la figure 1 ;
la figure 4 est une vue de côté d'un mécanisme d'accouplement de l'appareil de cuisson électrique de la figure 1 ;
la figure 5 est une vue de côté du mécanisme d'accouplement de la figure 3 dans différentes positions correspondant respectivement à différentes positions d'une structure supérieure de l'appareil de cuisson électrique de la figure 1.

### Description détaillée

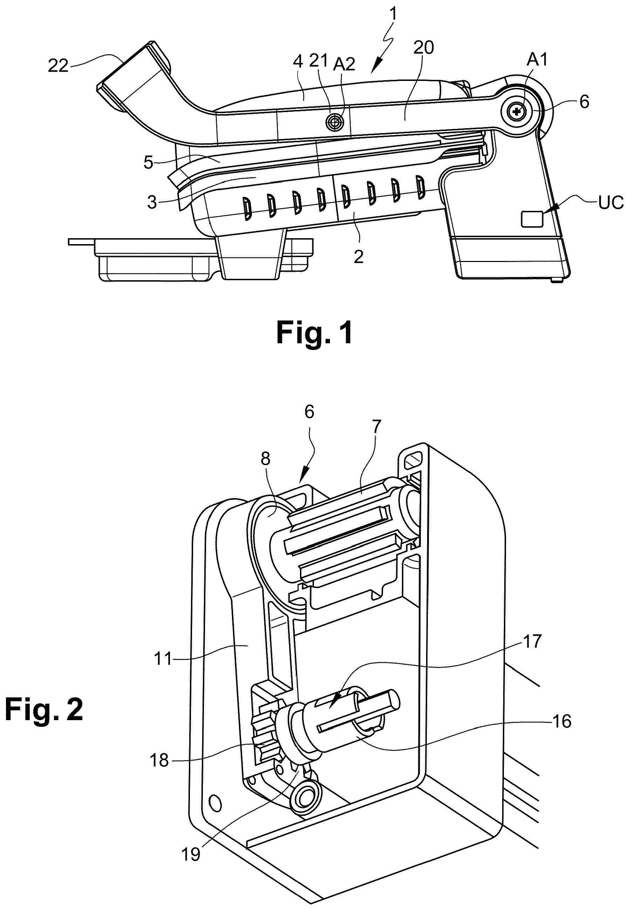

Les figures 1 à 5 représentent un appareil de cuisson électrique 1 configuré pour la cuisson d'aliments, tels que de la viande, du poisson, des légumes ou autres.

L'appareil de cuisson électrique 1 comporte une structure chauffante inférieure 2 qui comprend un module de cuisson inférieur 3 configuré pour cuire un aliment disposé sur le module de cuisson inférieur, et une structure supérieure 4 qui, selon le mode de réalisation représenté sur les figures, comprend un module de cuisson supérieur 5 configuré pour cuire l'aliment enserré entre les modules de cuisson inférieur et supérieur 3, 5. De façon avantageuse, les modules de chauffages inférieur et supérieur 3, 5 sont des plaques de cuisson, et la structure chauffante inférieure 2 comprend des pieds configurés pour reposer sur un support plat, tel qu'un plan de travail. Selon une variante de réalisation de l'invention, la structure supérieure 4 pourrait être formée par exemple par un couvercle configuré pour recouvrir le module de cuisson inférieur 3, et donc être dépourvue de module de cuisson supérieur 5.

La structure supérieure 4 est montée articulée par rapport à la structure chauffante inférieure 2 par l'intermédiaire d'une liaison pivot principale 6 qui définit un axe de pivotement principal A1. La liaison pivot principale 6 comporte plus particulièrement un arbre de pivotement 7 solidaire en rotation de la structure supérieure 4 et monté pivotant selon l'axe de pivotement principal A1.

De façon avantageuse, un mouvement d'écartement de la structure supérieure 4 par rapport à la structure chauffante inférieure 2 génère une rotation de l'arbre de pivotement 7 par rapport à la structure chauffante inférieure 2 et autour de l'axe de pivotement principal A1.

La structure supérieure 4 est configurée pour occuper :
- une position d'ouverture maximale dans laquelle au moins un aliment peut être introduit entre les modules de cuisson inférieur et supérieur 3, 5, et dans laquelle la structure chauffante inférieure 2 et la structure supérieure 4 présentent un écartement maximal et définissent un angle d'écartement supérieur à 90° et par exemple d'environ 100°,
- une position de fermeture dans laquelle la structure chauffante inférieure 2 et la structure supérieure 4 présentent un écartement minimal, et en particulier dans laquelle les modules de cuisson inférieur et supérieur 3, 5 sont en contact l'un avec l'autre, et
- une pluralité de positions d'ouverture intermédiaires qui sont situées entre la position d'ouverture maximale et la position de fermeture.

La pluralité de positions d'ouverture intermédiaires comporte plus particulièrement une position d'ouverture intermédiaire prédéterminée qui correspond par exemple à un écartement entre les modules de cuisson inférieur et supérieur 3, 5 compris entre 30 et 60 mm, et par exemple d'environ 40 mm.

Selon le mode de réalisation de l'invention tel que représenté sur les figures, l'appareil de cuisson électrique 1 comporte un dispositif de chauffage inférieur qui est prévu dans la structure chauffante inférieure 2 et qui est configuré pour chauffer le module de cuisson inférieur 3. Le dispositif de chauffage inférieur est disposé sous le module de cuisson inférieur 3, et comporte par exemple un élément résistif chauffant inférieur.

L'appareil de cuisson électrique 1 comporte en outre un dispositif de chauffage supérieur qui est prévu dans la structure supérieure 4 et qui est configuré pour chauffer le module de cuisson supérieur 5. Le dispositif de chauffage supérieur est disposé au-dessus du module de cuisson supérieur 5, et comporte par exemple un élément résistif chauffant supérieur.

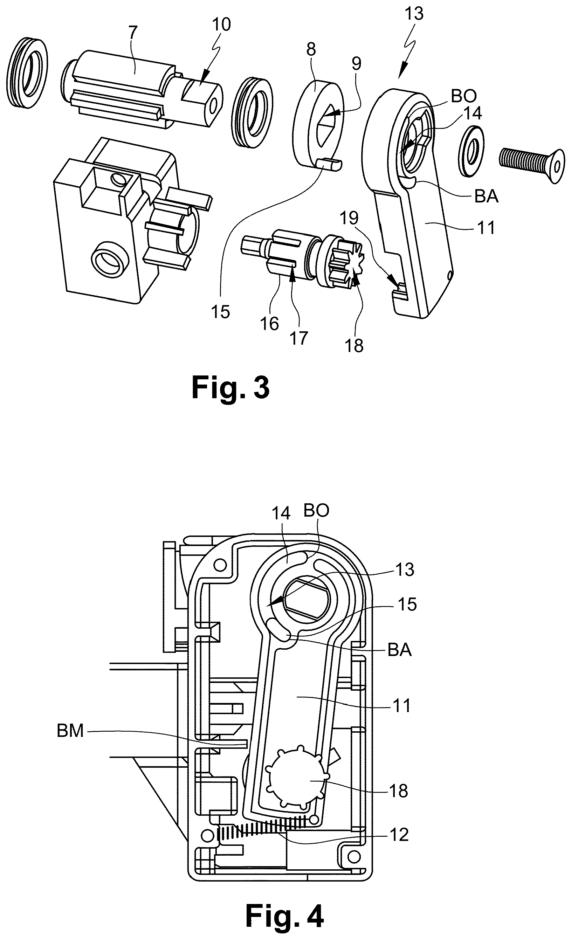

Selon le mode de réalisation de l'invention tel que représenté sur les figures, l'appareil de cuisson électrique 1 comporte également un élément de liaison 8 qui est couplé en rotation à la structure supérieure 4, et plus particulièrement à l'arbre de pivotement 7, et qui est mobile en rotation autour de l'axe de pivotement principal A1. Comme montré sur la figure 3, l'élément de liaison 8 peut par exemple présenter une forme générale de disque, et être pourvu d'un orifice de passage dont la surface interne est munie d'au moins un premier méplat 9 configuré pour coopérer avec au moins un deuxième méplat 10 prévu sur l'arbre de pivotement 7.

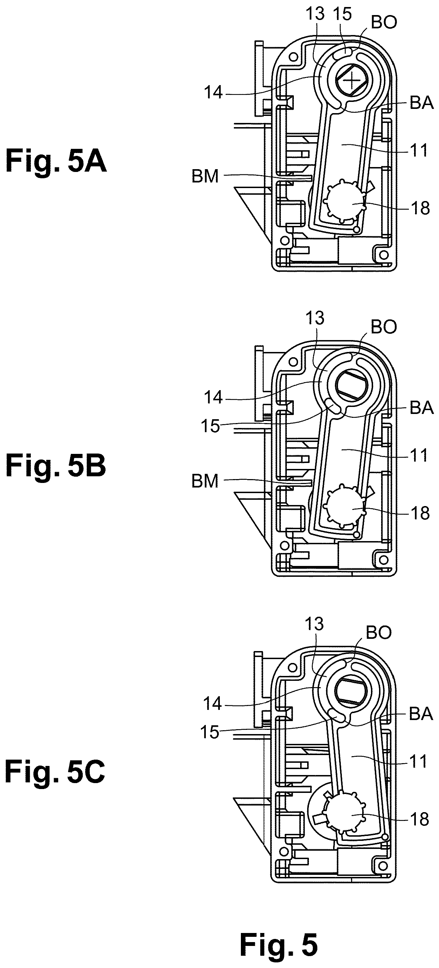

Comme visible plus particulièrement sur les figures 2 et 3, l'appareil de cuisson électrique 1 comporte également un balancier 11 qui est disposé dans la structure chauffante inférieure 2, et par exemple dans un pied arrière de la structure chauffante inférieure 2 ou dans une partie arrière d'un châssis de la structure chauffante inférieure 2. Le balancier 11 est monté mobile en rotation autour de l'axe de pivotement principal A1 et est mobile entre une première position de balancier (voir la figure 5A) et une deuxième position de balancier (voir la figure 5C). Le balancier 11 est configuré pour occuper la première position de balancier lorsque la structure supérieure 4 occupe une position située entre la position d'ouverture maximale et la position d'ouverture intermédiaire prédéterminée, et pour occuper la deuxième position de balancier lorsque la structure supérieure 4 occupe la position de fermeture. De façon avantageuse, la deuxième position de balancier correspond à un pivotement du balancier 11, par rapport à la première position de balancier, d'un angle de pivotement maximal compris entre 10 et 30°, et par exemple d'environ 15°.

Comme montré sur la figure 3, le balancier 11 est pourvu d'une ouverture de passage configurée pour permettre le passage d'une portion de l'arbre de pivotement 7, et autoriser un mouvement de rotation relatif entre l'arbre de pivotement 7 et le balancier 11.

Comme montré plus particulièrement sur les figures 4 et 5, la structure chauffante inférieure 2 comporte une partie de butée mécanique BM contre laquelle est configuré pour venir en butée le balancier 11 lorsque le balancier 11 occupe la première position de balancier. De façon avantageuse, la partie de butée mécanique BM est disposée dans un pied arrière de la structure chauffante inférieure 2 ou dans une partie arrière du châssis de la structure chauffante inférieure 2.

L'appareil de cuisson électrique 1 comporte également un dispositif de rappel 12 (voir la figure 4) qui est configuré pour solliciter le balancier 11 vers la première position de balancier 11. De façon avantageuse, le dispositif de rappel 12 est un ressort de rappel, tel qu'un ressort hélicoïdal, et comporte une première partie reliée à une partie inférieure du balancier 11 et une deuxième partie reliée à la structure chauffante inférieure 2.

Selon le mode de réalisation représenté sur les figures, le balancier 11 est prévu à proximité d'un bord latéral de la structure chauffante inférieure 2. Toutefois, et selon un autre mode de réalisation de l'invention non représenté sur les figures, le balancier 11 pourrait être prévu dans une partie centrale arrière de la structure chauffante inférieure 2.

L'appareil de cuisson électrique 1 comporte de plus un mécanisme d'accouplement 13 interposé entre le balancier 11 et l'élément de liaison 8. Le mécanisme d'accouplement 13 est déplaçable entre un état embrayé, dans lequel le mécanisme d'accouplement 13 est configuré pour déplacer en rotation le balancier 11 de la première position de balancier vers la deuxième position de balancier lors d'un déplacement de la structure supérieure 4 de la position d'ouverture intermédiaire prédéterminée vers la position de fermeture, et un état débrayé dans lequel le mécanisme d'accouplement 13 est configuré pour autoriser un déplacement en rotation de l'élément de liaison 8 par rapport au balancier 11 lors d'un déplacement de la structure supérieure 4 de la position d'ouverture intermédiaire prédéterminée vers la position d'ouverture maximale.

Le mécanisme d'accouplement 13 est plus particulièrement configuré pour occuper l'état débrayé lorsque la structure supérieure 4 est située entre la position d'ouverture maximale et la position d'ouverture intermédiaire prédéterminée, et pour occuper l'état embrayé lorsque la structure supérieure 4 est située entre la position d'ouverture intermédiaire prédéterminée et la position de fermeture.

Le mécanisme d'accouplement 13 est configuré de telle sorte qu'un déplacement de la structure supérieure 4 de la position d'ouverture maximale jusqu'à la position d'ouverture intermédiaire prédéterminée n'entraine aucun déplacement en rotation du balancier 11. Inversement, le mécanisme d'accouplement 13 est configuré de telle sorte qu'un déplacement de la structure supérieure 4 de la position d'ouverture intermédiaire prédéterminée jusqu'à la position de fermeture entraine un déplacement du balancier 11 depuis la première position de balancier jusqu'à la deuxième position de balancier.

Selon le mode de réalisation de l'invention tel que représenté sur les figures, le mécanisme d'accouplement 13 comporte une rainure en arc de cercle 14 qui est sensiblement centrée sur l'axe de pivotement principal A1, et un doigt d'entrainement 15 qui est configuré pour coulisser dans la rainure en arc de cercle 14. La rainure en arc de cercle 14 est plus particulièrement prévue sur le balancier 11, et le doigt d'entrainement 15 est plus particulièrement prévu sur l'élément de liaison 8, par exemple sur une face externe de l'élément de liaison 8, c'est-à-dire sur une face de l'élément de liaison 8 située vers l'extérieur de l'appareil de cuisson électrique 1. De façon avantageuse, la rainure en arc de cercle 14 s'étend sur un secteur angulaire qui est sensiblement centrée sur l'axe de pivotement principal A1 et ayant un angle compris entre 90° et 215°, et avantageusement entre 100° et 130° et est par exemple d'environ 115°.

Selon le mode de réalisation tel que représenté sur les figures, la première extrémité de la rainure en arc de cercle 14 définit une butée d'ouverture BO contre laquelle est configuré pour venir en butée le doigt d'entrainement 15 lorsque la structure supérieure 4 atteint la position d'ouverture maximale. La butée d'ouverture BO et la partie de butée mécanique BM sont configurées pour limiter la course de pivotement de la structure supérieure 4 à distance de la structure chauffante inférieure 2, et définissent donc la positon d'ouverture maximale.

La rainure en arc de cercle 14 comporte en outre une deuxième extrémité qui est opposée à la première extrémité et qui définit une butée d'actionnement BA. Le doigt d'entrainement 15 est configuré pour venir contre la butée d'actionnement BA lorsque la structure supérieure 4 est déplacée de la position d'ouverture maximale vers la position d'ouverture intermédiaire prédéterminée et atteint la position d'ouverture intermédiaire prédéterminée. La butée d'actionnement BA et le doigt d'entrainement 15 sont configurés de telle sorte qu'un déplacement de la structure supérieure 4 de la position d'ouverture intermédiaire prédéterminée à la position de fermeture entraîne un déplacement du balancier 11 de la première position de balancier à la deuxième position de balancier.

L'appareil de cuisson électrique 1 comporte en outre un dispositif de mesure 16 configuré pour coopérer avec le balancier 11 et pour mesurer l'épaisseur d'un aliment disposé sur le module de cuisson inférieur 3, et plus particulièrement l'écartement relatif entre le module de cuisson supérieur 5 et le module de cuisson inférieur 3, en fonction de la position occupée par le balancier 11, et plus particulièrement en fonction de l'angle de pivotement du balancier 11 par rapport à la première position de balancier. Selon le mode de réalisation de l'invention représenté sur les figures, le dispositif de mesure 16 est disposé dans la structure chauffante inférieure 2, et par exemple dans un pied arrière de la structure chauffante inférieure 2 ou dans une partie arrière du châssis de la structure chauffante inférieure 2.

Les position d'ouverture intermédiaires correspondent plus particulièrement respectivement à des positions de mesure d'épaisseur dans chacune desquelles l'épaisseur d'un aliment, enserré entre les modules de cuisson inférieur et supérieur 3, 5, est apte à être déterminée. La position d'ouverture intermédiaire prédéterminée de la structure supérieure 4 correspond à une position de mesure d'épaisseur maximale d'un aliment qui est enserré entre le module de cuisson supérieur 5 et le module de cuisson inférieur 3, et la position de fermeture de la structure supérieure 4 correspond à une position de mesure d'épaisseur minimale.

Le mécanisme d'accouplement 13 est plus particulièrement configuré pour ne pas entrainer le dispositif de mesure 16 lorsque la structure supérieure 4 est déplacée entre la position d'ouverture maximale, qui est configurée pour autoriser l'introduction d'aliments, et la position d'ouverture intermédiaire prédéterminée, qui correspond à l'épaisseur maximale pouvant être déterminée par le dispositif de mesure 16.

La figure 5 représente différentes positions du mécanisme d'accouplement 13 et du balancier 11 en fonction de la position de la structure supérieure 4 :
- la figure 5A représente le mécanisme d'accouplement 13 lorsque la structure supérieure 4 occupe la position d'ouverture maximale ; le balancier 11 occupe alors la première position de balancier,
- la figure 5B représente le mécanisme d'accouplement 13 lorsque la structure supérieure 4 occupe la position d'ouverture intermédiaire prédéterminée ; le balancier 11 occupe alors la première position de balancier. Le déplacement de la structure supérieure 4 entre la figure 5A et la figure 5B correspond à l'état débrayé du mécanisme d'accouplement 13,
- la figure 5C représente le mécanisme d'accouplement 13 lorsque la structure supérieure 4 occupe la position de fermeture ; le balancier occupe alors la deuxième position de balancier. Le déplacement de la structure supérieure 4 entre la figure 5B et la figure 5C correspond à l'état embrayé du mécanisme d'accouplement 13.

Avantageusement, l'utilisation du mécanisme d'accouplement 13 tel que décrit précédemment permet de calibrer la mesure effectuée par le dispositif de mesure 16 sur une plage de mesure restreinte, et plus particulièrement sur une plage de mesure définie par une mesure d'épaisseur minimale correspondant à la position de fermeture et une mesure d'épaisseur maximale correspondant à la position d'ouverture intermédiaire prédéterminée. La plage de mesure définie correspond aux variations d'épaisseur maximale d'un aliment positionné entre les modules de cuisson inférieur et supérieur 3, 5 de l'appareil de cuisson électrique 1, ce qui permet d'augmenter la précision de la mesure d'épaisseur des aliments.

Selon le mode de réalisation de l'invention représenté sur les figures, le dispositif de mesure 16 comporte un organe de mesure rotatif 17, tel qu'un potentiomètre rotatif, et un organe d'accouplement rotatif 18 qui est couplé en rotation avec l'organe de mesure rotatif 17 et qui est monté mobile en rotation autour d'un axe de rotation qui est sensiblement parallèle à l'axe de pivotement principal A1 et qui est confondu avec l'axe de rotation de l'organe de mesure rotatif 17. De façon avantageuse, l'organe d'accouplement rotatif 18 est un pignon denté configuré pour coopérer avec un secteur denté 19 prévu sur le balancier 11. Cependant, un tel dispositif d'accouplement pourrait être remplacé par exemple par un système d'accouplement pourvu d'un ensemble courroie / poulie.

L'organe d'accouplement rotatif 18 permet de convertir un déplacement de la structure supérieure 4, par rapport à la structure chauffante inférieure 2, en un mouvement de rotation de l'organe de mesure rotatif 17, tel qu'un potentiomètre rotatif, et d'éviter l'encombrement généré par l'utilisation d'un potentiomètre linéaire.

Selon le mode de réalisation de l'invention, l'appareil de cuisson électrique 1 comporte en outre une unité de commande UC qui est configurée pour commander le fonctionnement de l'appareil de cuisson électrique 1. Cette unité de commande UC est par exemple localisée dans une poignée de préhension 22. L'unité de commande UC est configurée pour gérer la cuisson de l'aliment enserré entre le module de cuisson supérieur 5 et le module de cuisson inférieur 3, ceci en fonction de l'écartement entre les modules de cuisson inférieur et supérieur 3, 5, et donc de l'épaisseur de l'aliment présent entre les modules de cuisson inférieur et supérieur 3, 5.

Selon un mode de réalisation de l'invention, et comme visible plus spécifiquement sur la figure 1, la structure supérieure 4 est reliée à la liaison pivot principale 6, et plus particulièrement à l'arbre de pivotement 7, par deux bras de liaison 20. De façon avantageuse, les deux bras de liaison 20 sont des bras de liaison latéraux et sont configuré pour s'étendre de part et d'autre de la structure supérieure 4.

L'appareil de cuisson électrique 1 comporte également au moins une liaison pivot secondaire 21, et selon le mode de réalisation tel que représenté sur les figures, l'appareil de cuisson comporte deux liaisons pivots secondaires 21 qui sont configurées pour relier la structure supérieure 4 aux bras de liaison 20 et pour autoriser une rotation de la structure supérieure 4 autour d'un axe de pivotement secondaire A2 qui est avantageusement sensiblement parallèle à l'axe de pivotement principal A1. De façon avantageuse, les liaisons pivots secondaires 21 permettent de positionner le module de cuisson supérieur 5 selon l'orientation voulue, et ceci sans être impacté par l'écartement relatif entre le module de cuisson supérieur 5 et le module de cuisson inférieur 3. D'une façon générale, le module de cuisson supérieur 5 est orienté afin d'offrir une surface de contact maximale avec l'aliment disposé sur le module de cuisson inférieur 3, de telle sorte que la cuisson soit réalisée d'une façon homogène.

Comme montré sur la figure 1, la structure supérieure 4 comporte la poignée de préhension 22 qui est prévue sur la partie antérieure de la structure supérieure 4, et qui permet de faciliter les déplacements de la structure supérieure 4 entre la position d'ouverture maximale et la position de fermeture.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention telle que définie par les revendications ci-jointes.

## Revendications

1. **Appareil** de cuisson électrique (1) pour la cuisson d'aliments, l'appareil de cuisson électrique (1) comportant :
- une structure chauffante inférieure (2) qui comporte un module de cuisson inférieur (3) configuré pour cuire un aliment disposé sur le module de cuisson inférieur (3) ;
- une structure supérieure (4) montée articulée par rapport à la structure chauffante inférieure (2) par l'intermédiaire d'une liaison pivot principale (6) définissant un axe de pivotement principal (A1), ladite structure supérieure (4) étant configurée pour occuper au moins :
o une position d'ouverture maximale dans laquelle la structure chauffante inférieure (2) et la structure supérieure (4) présentent un écartement maximal et au moins un aliment peut être disposé sur le module de cuisson inférieur (3),
o une position de fermeture dans laquelle la structure chauffante inférieure (2) et la structure supérieure (4) présentent un écartement minimal,
o une pluralité de positions d'ouverture intermédiaires qui sont situées entre la position d'ouverture maximale et la position de fermeture,
- une unité de commande (UC) configurée pour commander le fonctionnement de l'appareil de cuisson électrique (1) ;
- un élément de liaison (8) qui est couplé en rotation à la structure supérieure (4) et qui est mobile en rotation autour de l'axe de pivotement principal (A1),
- un balancier (11) monté mobile en rotation autour de l'axe de pivotement principal (A1) et entre une première position de balancier (11) et une deuxième position de balancier (11),
- un dispositif de mesure (16) configuré pour coopérer avec le balancier (11) et pour mesurer l'épaisseur de l'aliment disposé sur le module de cuisson inférieur (3) en fonction de la position occupée par le balancier (11) entre la première position de balancier (11) et la deuxième position de balancier (11), et
- un mécanisme d'accouplement (13) interposé entre le balancier (11) et l'élément de liaison (8), le mécanisme d'accouplement (13) étant déplaçable entre un état embrayé dans lequel le mécanisme d'accouplement (13) est configuré pour déplacer en rotation le balancier (11) de la première position de balancier vers la deuxième position de balancier lors d'un déplacement de la structure supérieure (4) d'une position d'ouverture intermédiaire prédéterminée vers la position de fermeture, et un état débrayé dans lequel le mécanisme d'accouplement (13) est configuré pour autoriser un déplacement en rotation de l'élément de liaison (8) par rapport au balancier (11) lors d'un déplacement de la structure supérieure (4) de la position d'ouverture intermédiaire prédéterminée vers **la** position d'ouverture maximale,
**caractérisé en ce que** le mécanisme d'accouplement (13) comporte une rainure en arc de cercle (14) qui est sensiblement centrée sur l'axe de pivotement principal (A) et qui est prévue sur le balancier (11), et un doigt d'entrainement (15) qui est prévu sur l'élément de liaison (8) et qui est configuré pour coulisser dans la rainure en arc de cercle (14) lorsque la structure supérieure (4) est déplacée de la position d'ouverture intermédiaire prédéterminée vers la position d'ouverture maximale, et **en ce que** la rainure en arc de cercle (14) comporte une première extrémité et une deuxième extrémité qui est opposée à la première extrémité, la deuxième extrémité définissant une butée d'actionnement (BA) contre laquelle est configuré pour venir en butée le doigt d'entrainement (15) lorsque la structure supérieure (4), déplacée de la position d'ouverture maximale vers la position d'ouverture intermédiaire prédéterminée, atteint la position d'ouverture intermédiaire prédéterminée, la butée d'actionnement (BA) et le doigt d'entrainement (15) étant configurés de telle sorte qu'un déplacement de la structure supérieure (4) de la position d'ouverture intermédiaire prédéterminée vers la position de fermeture entraîne un déplacement du balancier (11) de la première position de balancier vers la deuxième position de balancier.

2. Appareil de cuisson électrique (1) selon la revendication 1, dans lequel le dispositif de mesure (16) comporte un organe de mesure rotatif (17) et un organe d'accouplement rotatif (18) qui est couplé en rotation avec l'organe de mesure rotatif (17) et qui est configuré pour coopérer avec le balancier (11).

3. Appareil de cuisson électrique (1) selon la revendication 2, dans lequel l'organe d'accouplement rotatif (18) est monté mobile en rotation selon un axe de rotation qui est sensiblement parallèle à l'axe de pivotement principal (A2).

4. Appareil de cuisson électrique (1) selon la revendication 2 ou 3, dans lequel l'organe d'accouplement rotatif (18) est un pignon denté configuré pour coopérer avec un secteur denté (19) prévu sur le balancier (11).

5. Appareil de cuisson électrique (1) selon l'une quelconque des revendications précédentes, dans lequel la rainure en arc de cercle (14) s'étend sur un secteur angulaire qui est sensiblement centrée sur l'axe de pivotement principal (A1) et ayant un angle compris entre 90° et 180°.

6. Appareil de cuisson électrique (1) selon l'une quelconque des revendications précédentes, lequel comporte un dispositif de rappel (12) configuré pour solliciter le balancier (11) vers la première position de balancier (11).

7. Appareil de cuisson électrique (1) selon l'une quelconque des revendications précédentes, dans lequel la structure supérieure (4) est une structure chauffante supérieure et comporte un module de cuisson supérieur (5) configuré pour cuire un aliment enserré entre le module de cuisson supérieur (5) et le module de cuisson inférieur (3).

8. Appareil de cuisson électrique (1) selon l'une quelconque des revendications précédentes, dans lequel la première extrémité de la rainure en arc de cercle (14) définit une butée d'ouverture (BO) contre laquelle est configuré pour venir en butée le doigt d'entrainement (15) lorsque la structure supérieure (4) atteint la position d'ouverture maximale.

9. Appareil de cuisson électrique (1) selon la revendication précédente, dans lequel la structure chauffante inférieure (2) comporte une partie de butée mécanique (BM) contre laquelle est configuré pour venir en butée le balancier (11) lorsque le balancier (11) occupe la première position de balancier, la butée d'ouverture (BO) et la partie de butée mécanique (BM) étant configurées pour limiter la course de pivotement de la structure supérieure (4) à distance de la structure chauffante inférieure (2).

## Patentansprüche

1. Elektrisches Kochgerät (1) zum Garen von Lebensmitteln, wobei das elektrische Kochgerät (1) umfasst:
• eine untere Heizstruktur (2) mit einem unteren Kochmodul (3), das konfiguriert ist, um ein auf dem unteren Kochmodul (3) platziertes Lebensmittel zu garen;
• eine obere Struktur (4), die schwenkbar relativ zur unteren Heizstruktur (2) über ein Hauptscharniergelenk (6) montiert ist, das eine Hauptschwenkachse (A1) definiert, wobei die obere Struktur (4) so konfiguriert ist, dass sie mindestens eine Position einnimmt: o eine maximale Öffnungsposition, in der die untere Heizstruktur (2) und die obere Struktur (4) einen maximalen Abstand haben und mindestens ein Lebensmittel auf dem unteren Kochmodul (3) platziert werden kann, o eine geschlossene Position, in der die untere Heizstruktur (2) und die obere Struktur (4) einen minimalen Abstand haben, o eine Vielzahl von Zwischenöffnungspositionen, die zwischen der maximalen Öffnungsposition und der geschlossenen Position liegen,
• eine Steuereinheit (UC), die konfiguriert ist, um den Betrieb des elektrischen Kochgeräts (1) zu steuern;
• ein Verbindungselement (8), das drehbar mit der oberen Struktur (4) gekoppelt ist und um die Hauptschwenkachse (A1) drehbar ist,
• einen Gegenbalancierer (11), der drehbar um die Hauptschwenkachse (A1) zwischen einer ersten Gegenbalanciererposition (11) und einer zweiten Gegenbalanciererposition (11) montiert ist,
• ein Messgerät (16), das konfiguriert ist, um mit dem Gegenbalancierer (11) zu kooperieren und die Dicke des auf dem unteren Kochmodul (3) platzierten Lebensmittels basierend auf der vom Gegenbalancierer (11) eingenommenen Position zwischen der ersten Gegenbalanciererposition (11) und der zweiten Gegenbalanciererposition (11) zu messen, und
• einen Kupplungsmechanismus (13), der zwischen dem Gegenbalancierer (11) und dem Verbindungselement (8) eingesetzt ist, wobei der Kupplungsmechanismus (13) zwischen einem eingerückten Zustand beweglich ist, in dem der Kupplungsmechanismus (13) konfiguriert ist, um den Gegenbalancierer (11) von der ersten Gegenbalanciererposition zur zweiten Gegenbalanciererposition zu drehen, wenn die obere Struktur (4) sich von einer vorbestimmten Zwischenöffnungsposition zur geschlossenen Position bewegt, und einem ausgerückten Zustand, in dem der Kupplungsmechanismus (13) konfiguriert ist, um eine Drehbewegung des Verbindungselements (8) relativ zum Gegenbalancierer (11) zuzulassen, wenn die obere Struktur (4) sich von der vorbestimmten Zwischenöffnungsposition zur maximalen Öffnungsposition bewegt, **dadurch gekennzeichnet, dass** der Kupplungsmechanismus (13) eine bogenförmige Rille (14) umfasst, die im Wesentlichen auf die Hauptschwenkachse (A) zentriert ist und die am Gegenbalancierer (11) vorgesehen ist, und einen Antriebsstift (15), der am Verbindungselement (8) vorgesehen ist und konfiguriert ist, um in der bogenförmigen Rille (14) zu gleiten, wenn die obere Struktur (4) von der vorbestimmten Zwischenöffnungsposition zur maximalen Öffnungsposition bewegt wird, und dadurch, dass die bogenförmige Rille (14) ein erstes Ende und ein entgegengesetztes zweites Ende hat, wobei das zweite Ende einen Betätigungsanschlag (BA) definiert, gegen den der Antriebsstift (15) konfiguriert ist, um anzustoßen, wenn die obere Struktur (4), bewegt von der maximalen Öffnungsposition zur vorbestimmten Zwischenöffnungsposition, die vorbestimmte Zwischenöffnungsposition erreicht, wobei der Betätigungsanschlag (BA) und der Antriebsstift (15) so konfiguriert sind, dass eine Bewegung der oberen Struktur (4) von der vorbestimmten Zwischenöffnungsposition zur geschlossenen Position eine Bewegung des Gegenbalancierers (11) von der ersten Gegenbalanciererposition zur zweiten Gegenbalanciererposition bewirkt.

2. Elektrisches Kochgerät (1) nach Anspruch 1, wobei das Messgerät (16) ein rotierendes Messglied (17) und ein rotierendes Kupplungsglied (18) umfasst, das rotationsmäßig mit dem rotierenden Messglied (17) gekoppelt ist und konfiguriert ist, um mit dem Gegenbalancierer (11) zu kooperieren.

3. Elektrisches Kochgerät (1) nach Anspruch 2, wobei das rotierende Kupplungsglied (18) drehbar montiert ist um eine Rotationsachse, die im Wesentlichen parallel zur Hauptschwenkachse (A2) ist.

4. Elektrisches Kochgerät (1) nach Anspruch 2 oder 3, wobei das rotierende Kupplungsglied (18) ein ä R Zahnrad ist, das konfiguriert ist, um mit einem gezahnten Sektor (19) zu kooperieren, der am Gegenbalancierer (11) vorgesehen ist.

5. Elektrisches Kochgerät (1) nach einem der vorhergehenden Ansprüche, wobei die bogenförmige Rille (14) sich über einen Winkelbereich erstreckt, der im Wesentlichen auf die Hauptschwenkachse (A1) zentriert ist und einen Winkel zwischen 90° und 180° hat.

6. Elektrisches Kochgerät (1) nach einem der vorhergehenden Ansprüche, das einen Rückführungsmechanismus (12) umfasst, der konfiguriert ist, um den Gegenbalancierer (11) in Richtung der ersten Gegenbalanciererposition (11) zu drängen.

7. Elektrisches Kochgerät (1) nach einem der vorhergehenden Ansprüche, wobei die obere Struktur (4) eine obere Heizstruktur ist und ein oberes Kochmodul (5) umfasst, das konfiguriert ist, um ein Lebensmittel einzuschließen, das zwischen dem oberen Kochmodul (5) und dem unteren Kochmodul (3) platziert ist.

8. Elektrisches Kochgerät (1) nach einem der vorhergehenden Ansprüche, wobei das erste Ende der bogenförmigen Rille (14) einen Öffnungsanschlag (BO) definiert, gegen den der Antriebsstift (15) konfiguriert ist, um anzustoßen, wenn die obere Struktur (4) die maximale Öffnungsposition erreicht.

9. Elektrisches Kochgerät (1) nach dem vorhergehenden Anspruch, wobei die untere Heizstruktur (2) einen mechanischen Anschlagteil (BM) hat, gegen den der Gegenbalancierer (11) konfiguriert ist anzustoßen, wenn der Gegenbalancierer (11) die erste Gegenbalanciererposition einnimmt, wobei der Öffnungsanschlag (BO) und das mechanische Anschlagteil (BM) konfiguriert sind, um den Schwenkbereich der oberen Struktur (4) in einem Abstand zur unteren Heizstruktur (2) zu begrenzen.

## Claims

1. An electric cooking appliance (1) for cooking food, the electric cooking appliance (1) comprising:
• a lower heating structure (2) comprising a lower cooking module (3) configured to cook food placed on the lower cooking module (3);
• an upper structure (4) hingedly mounted relative to the lower heating structure (2) via a main pivot joint (6) defining a main pivot axis (A1), said upper structure (4) being configured to occupy at least: o a maximum open position wherein the lower heating structure (2) and the upper structure (4) have a maximum separation and at least one food item can be placed on the lower cooking module (3), o a closed position wherein the lower heating structure (2) and the upper structure (4) have a minimal separation, o a plurality of intermediate open positions located between the maximum open position and the closed position,
• a control unit (UC) configured to control the operation of the electric cooking appliance (1);
• a coupling element (8) rotatably coupled to the upper structure (4) and rotatable around the main pivot axis (A1),
• a counterweight (11) rotatably mounted around the main pivot axis (A1) and between a first counterweight position (11) and a second counterweight position (11),
• a measuring device (16) configured to cooperate with the counterweight (11) and to measure the thickness of food placed on the lower cooking module (3) based on the position occupied by the counterweight (11) between the first counterweight position (11) and the second counterweight position (11), and
• a coupling mechanism (13) interposed between the counterweight (11) and the coupling element (8), the coupling mechanism (13) being movable between an engaged state wherein the coupling mechanism (13) is configured to rotate the counterweight (11) from the first counterweight position to the second counterweight position when the upper structure (4) moves from a predetermined intermediate open position to the closed position, and a disengaged state wherein the coupling mechanism (13) is configured to allow rotational movement of the coupling element (8) relative to the counterweight (11) when the upper structure (4) moves from the predetermined intermediate open position to the maximum open position, **characterized in that** the coupling mechanism (13) comprises an arcuate groove (14) substantially centered on the main pivot axis (A) provided on the counterweight (11), and a drive pin (15) provided on the coupling element (8) and configured to slide in the arcuate groove (14) when the upper structure (4) is moved from the predetermined intermediate open position to the maximum open position, and **in that** the arcuate groove (14) has a first end and a second end opposite the first end, the second end defining an actuating stop (AS) against which the drive pin (15) is configured to abut when the upper structure (4), moved from the maximum open position to the predetermined intermediate open position, reaches the predetermined intermediate open position, the actuating stop (AS) and the drive pin (15) being configured such that movement of the upper structure (4) from the predetermined intermediate open position to the closed position causes movement of the counterweight (11) from the first counterweight position to the second counterweight position.

2. An electric cooking appliance (1) according to claim 1, wherein the measuring device (16) comprises a rotary measuring member (17) and a rotary coupling member (18) rotatably coupled to the rotary measuring member (17) and configured to cooperate with the counterweight (11).

3. An electric cooking appliance (1) according to claim 2, wherein the rotary coupling member (18) is rotatably mounted about a rotation axis that is substantially parallel to the main pivot axis (A2).

4. An electric cooking appliance (1) according to claim 2 or 3, wherein the rotary coupling member (18) is a toothed pinion configured to cooperate with a toothed sector (19) provided on the counterweight (11).

5. An electric cooking appliance (1) according to any of the preceding claims, wherein the arcuate groove (14) extends over an angular sector that is substantially centered on the main pivot axis (A1) and has an angle between 90° and 180°.

6. An electric cooking appliance (1) according to any of the preceding claims, which comprises a return device (12) configured to bias the counterweight (11) towards the first counterweight position (11).

7. An electric cooking appliance (1) according to any of the preceding claims, wherein the upper structure (4) is an upper heating structure and comprises an upper cooking module (5) configured to cook food clamped between the upper cooking module (5) and the lower cooking module (3).

8. An electric cooking appliance (1) according to any of the preceding claims, wherein the first end of the arcuate groove (14) defines an opening stop (OS) against which the drive pin (15) is configured to abut when the upper structure (4) reaches the maximum open position.

9. An electric cooking appliance (1) according to the preceding claim, wherein the lower heating structure (2) has a mechanical stop part (MS) against which the counterweight (11) is configured to abut when the counterweight (11) occupies the first counterweight position, the opening stop (OS) and the mechanical stop part (MS) being configured to limit the pivoting travel of the upper structure (4) at a distance from the lower heating structure (2).
